# EUROPEAN PATENT APPLICATION

(11) **EP 3 972 259 A1**
(43) Date of publication of application: **23.03.2022**
(21) Application number: 20810064.4
(22) Date of filing: 13.04.2020
(51) Int. Cl.: H04N 21/2343

(54) **VIDEO TRANSCODING METHOD AND APPARATUS, AND ELECTRONIC DEVICE AND STORAGE MEDIUM**

(30) Priority: 17.05.2019 CN 201910414407
(71) Applicant: Beijing Dajia Internet Information Technology Co., Ltd., Haidian District Beijing 100085 (CN)
(72) Inventor: WANG, Xiaonan, Beijing 100085 (CN); CHEN, Yucong, Beijing 100085 (CN); WEN, Xing, Beijing 100085 (CN); ZHENG, Yunfei, Beijing 100085 (CN); CHEN, Min, Beijing 100085 (CN); HUANG, Yue, Beijing 100085 (CN)
(74) Representative: Mathys & Squire
(86) International application number: PCT/CN2020/084552
(87) International publication number: WO 2020/233283

(57) **Abstract**

The present application provides a video transcoding method and apparatus, and an electronic device and a storage medium. The method comprises: performing a first transcoding operation on a first video stream on the basis of a first transcoding parameter; obtaining first transcoding result information associated with the first transcoding operation; upon receiving a second video stream, obtaining, according to a first association relationship between the transcoding result information and the transcoding parameter, a second transcoding parameter corresponding to the first transcoding result information; and performing a second transcoding operation on the second video stream on the basis of the second transcoding parameter. In the present application, the transcoding parameter is automatically adjusted in real time according to real-time transcoding result information, without manual intervention, thus reducing the input of labor costs.

## Description

### Cross Reference to Related Applications

The present application claims the priority of the Chinese Patent Application No. 201910414407.1, filed to the China National Intellectual Property Administration on May 17, 2019 and entitled "VIDEO TRANSCODING METHOD AND APPARATUS, AND ELECTRONIC DEVICE AND STORAGE MEDIUM", the entire contents of which are incorporated herein by reference.

### Field

The present disclosure relates to the field of video processing, in particular to a method and apparatus for video transcoding, an electronic device and a storage medium.

### Background

With rapid development of network multimedia technologies, a playback form of video files is no longer limited to a specific video bitstream, and standard definition video bitstreams, high-definition video bitstreams, ultra-high-definition video bitstreams and the like have gradually emerged to meet different network playback environments, which requires video service providers to use a transcoding system to transcode the video files so as to obtain video bitstreams of various definitions for video players to play.

The inventors have found that, at present, in an on-demand system application, it is common to transcode an on-demand video using a set of parameters pre-set by an encoding parameter designer, and then obtain quality of service (QoS) and quality of experience (QoE) indexes of an actual service according to statistics of a data platform. If there is an obvious problem in the service indexes, the parameter designer will modify transcoding parameters according to his/her own experience and specific index requirements so as to ensure that a subsequent on-demand video meets the requirements.

In the above-mentioned scheme, manual intervention is required to set the transcoding parameters, resulting in an increase in manpower cost. Moreover, very rich encoding experience is required to design the transcoding parameters of a video, and the professional ability of a transcoding parameter designer is required to be high.

### Summary

In order to overcome the problems in the related art, the present disclosure provides a method and apparatus for video transcoding, an electronic device, and a non-transitory computer-readable storage medium.

According to a first aspect of an embodiment of the present disclosure, a method for video transcoding is provided, including: performing a first transcoding operation on a first video stream based on a first transcoding parameter; acquiring first transcoding result information associated with the first transcoding operation; upon receiving a second video stream, obtaining a second transcoding parameter corresponding to the first transcoding result information based on a first association relationship between transcoding result information and transcoding parameters; and performing a second transcoding operation on the second video stream based on the second transcoding parameter.

According to a second aspect of an embodiment of the present disclosure, an apparatus for video transcoding is provided, including: a first transcoding operation execution module, configured to perform a first transcoding operation on a first video stream based on a first transcoding parameter; a first transcoding result obtaining module, configured to acquire first transcoding result information associated with the first transcoding operation; a second transcoding parameter obtaining module, configured to obtain a second transcoding parameter corresponding to the first transcoding result information based on a first association relationship between transcoding result information and transcoding parameters upon receiving a second video stream; and a second transcoding operation execution module, configured to perform a second transcoding operation on the second video stream based on the second transcoding parameter.

According to a third aspect of an embodiment of the present disclosure, an electronic device is provided, including: a processor; and a memory, configured to store instructions executable by the processor. The processor is configured to: when one or more programs are executed by one or more processors, the one or more processors realize the method for video transcoding according to any one of the above.

According to a fourth aspect of an embodiment of the present disclosure, a non-transitory computer-readable storage medium is provided. In the case that instructions in the storage medium are executed by a processor of a mobile terminal, the mobile terminal executes the method for video transcoding.

### Brief Description of the Drawings

Accompanying drawings here, which are incorporated in and constitute a part of this specification, illustrate embodiments consistent with the present disclosure and, together with the specification, serve to explain principles of the present disclosure.
Fig. 1 is a flowchart of steps of a method for video transcoding according to an exemplary embodiment.
Fig. 2 is a flowchart of steps of a method for video transcoding according to an exemplary embodiment.
Fig. 3 is a structural block diagram of an apparatus for video transcoding according to an exemplary embodiment.
Fig. 4 is a structural block diagram of an apparatus for video transcoding according to an exemplary embodiment.
Fig. 5 is a block diagram of an electronic device for video transcoding according to an exemplary embodiment.
Fig. 6 is a block diagram of an apparatus for video transcoding according to an exemplary embodiment.
Fig. 7 is a block diagram of an apparatus for video transcoding according to an exemplary embodiment.

### Detailed Description of the Embodiments

### Embodiment 1.

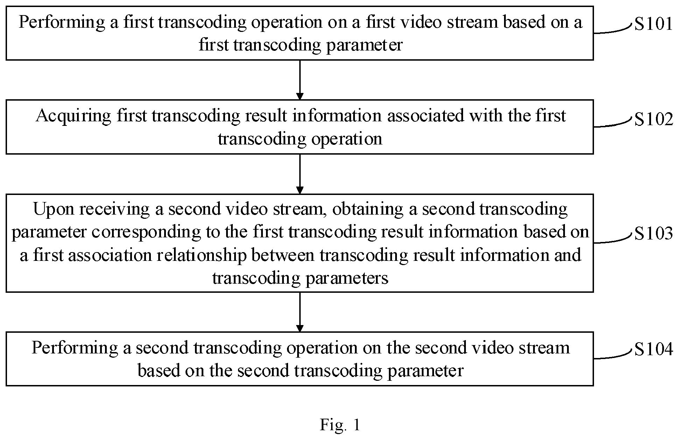

Fig. 1 is a flowchart of a method for video transcoding according to an exemplary embodiment. The method for video transcoding includes the following steps.

In S101, a first transcoding operation is performed on a first video stream based on a first transcoding parameter.

The embodiments of the present disclosure are applied to a scenario where a video stream released in an on-demand system is transcoded, that is, before a video is pushed to a user, the on-demand system performs a transcoding operation on the released video stream.

The first transcoding parameter refers to a video transcoding parameter preset by a parameter designer in the on-demand system. The first transcoding parameter is determined according to business requirements and the on-demand system. This is not limited in the embodiments of the present disclosure.

The first video stream refers to a video stream that is transcoded according to the first transcoding parameter. The first video stream includes a video stream released by the user in the on-demand system. Before corresponding videos are pushed to other users, the on-demand system performs one or more transcoding operations in advance.

The first transcoding operation refers to an operation of performing video transcoding on the first video stream according to the first transcoding parameter. Video transcoding refers to converting a compressed and encoded video bitstream into another video bitstream to adapt to different network bandwidths, different terminal processing capabilities and different user needs.

In the embodiments of the present disclosure, after the on-demand system receives the first video stream released by the user, the first transcoding operation is performed on the first video stream according to the first transcoding parameter preset by a transcoding parameter designer.

It may be understood that the first video stream is a single video stream or a group of video streams (i.e., multiple video streams). In the case that a single video stream is adopted to be subjected to the first transcoding operation, in a subsequent process, the first transcoding parameter is adjusted based on transcoding result information corresponding to the first transcoding operation performed on the single video stream, and the accuracy of adjustment is low. In the case that a group of first video streams are adopted to be subjected to the first transcoding operation, in a subsequent process, the first transcoding parameter is adjusted based on transcoding result information corresponding to the first transcoding operation performed on the group of video streams, the accuracy of parameter adjustment is high.

Thus, in the embodiments of the present disclosure, the first video stream is preferably a group of video streams, and of course, the first video stream may also be applied to the embodiments of the present disclosure as a single video stream, which is not limited in the embodiments of the present disclosure.

After the first transcoding operation is performed on the first video stream based on the first transcoding parameter, S102 is performed.

In S102, first transcoding result information associated with the first transcoding operation is obtained.

The first transcoding result information refers to received transcoding result information fed back by an on-demand system or fed back after a user watches a transcoded video stream, after the transcoded video stream is obtained by transcoding the first video stream. The first transcoding result information includes at least one of video quality (such as peak signal to noise ratio (PSNR)), a video code rate, video complexity information, QoS/QoE indicators (such as video completion rate and lag rate) and the like.

A content contained in the first transcoding result information is determined according to business requirements, which is not limited in the embodiments of the present disclosure.

After the first transcoding operation is performed on the first video stream based on the first transcoding parameter, the first transcoding result information associated with the first transcoding operation is obtained. The first transcoding result information includes the quality of service information and/or quality of experience information. The quality of service information refers to information fed back by an on-demand system after the first transcoding operation is performed on the first video stream. The quality of experience information refers to information fed back by a user after the first transcoding operation is performed on the first video stream to obtain a transcoded video stream and the transcoded video stream is pushed to the user.

With regard to different contents contained in the first transcoding result information, manners of obtaining the first transcoding result information associated with the first transcoding operation are also different, which, specifically, are described in detail in the following specific implementations.

In a specific implementation of the present disclosure, in the case that the first transcoding result information includes the quality of service information, S102 includes A1.

In A1, in response to completion of the first transcoding operation, a first target video is obtained.

In the embodiments of the present disclosure, the first target video refers to a video obtained after the first video stream is transcoded based on the first transcoding parameter.

The quality of service information refers to information fed back by an on-demand system after the first transcoding operation is performed on the first video stream. The quality of service information includes one or more of video quality information, a video code rate, and video complexity information, which, specifically, may be determined according to business requirements, and is not limited in the embodiments of the present disclosure.

After the first transcoding operation is performed on the first video stream based on the first transcoding parameter, the first target video is obtained.

After the first target video is obtained, A2 is performed.

In A2, quality of service information associated with the first target video fed back by the system is obtained.

After obtaining the first target video, the on-demand system automatically feeds back the quality of service information associated with the first target video based on the first target video, namely, quality of service information associated with a target video obtained after the first transcoding operation is performed.

In another specific implementation of the present disclosure, in the case that the first transcoding result information further includes the quality of experience information, S102 further includes B1.

In B1, in a process that the user is watching the first target video, quality of experience information associated with the first target video is monitored by a data monitoring platform.

In the embodiments of the present disclosure, the quality of experience information refers to information fed back by the user after the first target video is pushed to the user, focusing on reflecting quality of the user's experience.

The quality of experience information includes one or more of video lag rate information and video completion rate information.

After the first target video is pushed to the user, the quality of experience information associated with the first target video in the process that the user is watching the first target video is monitored by the data monitoring platform.

After the quality of experience information associated with the first target video is monitored by the data monitoring platform, B2 is performed.

In B2, the quality of experience information monitored by the data monitoring platform is obtained.

After the data monitoring platform monitors and obtains the quality of experience information associated with the first target video, the data monitoring platform feeds back the monitored and obtained quality of experience information to the on-demand system, and thus the on-demand system obtains the quality of experience information.

In the embodiments of the present disclosure, the first transcoding result information includes any one of the quality of service information and the quality of experience information, or includes both the quality of service information and the quality of experience information, which, specifically, may be determined according to business requirements, and is not limited in the embodiments of the present disclosure.

In a specific implementation, the first transcoding result information may further include other information, which, specifically, may be determined according to actual conditions.

After the first transcoding result information associated with the first transcoding operation is obtained, S103 is performed.

In S103, upon receiving a second video stream, a second transcoding parameter corresponding to the first transcoding result information is obtained based on a first association relationship between transcoding result information and transcoding parameters.

The second video stream is a video stream released by the user in the on-demand system, with a transcoding operation performed after the first video stream.

The first video stream can be released in the on-demand system before the second video stream, or the second video stream can be released in the on-demand system before the first video stream. The first video stream and the second video stream can be released in the on-demand system by the same user, or by different users, which, specifically, may be determined according to service requirements, and is not limited in the embodiments of the present disclosure.

The second transcoding parameter refers to a transcoding parameter obtained according to the first transcoding result information obtained by the first transcoding operation.

The first association relationship refers to an association relationship between transcoding result information and transcoding parameters pre-stored in the on-demand system.

The association relationship between transcoding result information and transcoding parameters is pre-stored in the on-demand system. For example, the transcoding result information includes information A, information B, and information C, and transcoding parameters associated with the information A, the information B and the information C respectively are a parameter 1, a parameter 2, and a parameter 3.

The above mapping relationship is stored in the form of a list in the on-demand system, as shown in Table 1 below.

**Table 1**

| Transcoding result information | Transcoding parameter(s) |
|---|---|
| A | 1 |
| B | 2 |
| C | 3 |

Of course, in the on-demand system, the above association relationship is further stored in a database, which, specifically, may be determined according to business requirements, and is not limited in the embodiments of the present disclosure.

Upon receiving the second video stream that needs to be transcoded, the second transcoding parameter corresponding to the first transcoding result information is obtained according to the first association relationship between transcoding result information and transcoding parameters.

It may be understood that the second video stream is a single video stream or a group of video streams (i.e., multiple video streams). In the case that a single video stream is adopted to be subjected to a second transcoding operation, in a subsequent process, the second transcoding parameter is adjusted on the basis of transcoding result information corresponding to the second transcoding operation performed on the single video stream, the accuracy of adjustment is low. In the case that a group of second video streams are adopted to be subjected to the second transcoding operation, and in a subsequent process, the second transcoding parameter is adjusted on the basis of transcoding result information corresponding to the second transcoding operation performed on the group of video streams, the accuracy of parameter adjustment is high.

In the embodiments of the present disclosure, the second video stream is preferably a group of video streams, and of course, the second video stream is also applied to the embodiments of the present disclosure as a single video stream, which is not limited in the embodiments of the present disclosure.

After the second transcoding parameter is obtained, S104 is performed.

In S104, the second transcoding operation is performed on the second video stream based on the second transcoding parameter.

After the second transcoding parameter is obtained, the second transcoding operation is performed on the second video stream based on the second transcoding parameter.

According to the embodiments of the present disclosure, the transcoding parameters are automatically adjusted in real time according to the real-time transcoding result information without manual intervention, which reduces the input of labor costs.

According to the method for video transcoding provided by the embodiments of the present disclosure, the first transcoding operation is performed on the first video stream based on the first transcoding parameter; the first transcoding result information associated with the first transcoding operation is obtained; upon receiving the second video stream, the second transcoding parameter corresponding to the first transcoding result information is obtained according to the first association relationship between transcoding result information and transcoding parameters; and the second transcoding operation is performed on the second video stream based on the second transcoding parameter. According to the embodiments of the present disclosure, the transcoding parameters are automatically adjusted in real time according to the real-time transcoding result information without manual intervention, which reduces the input of labor costs.

### Embodiment 2.

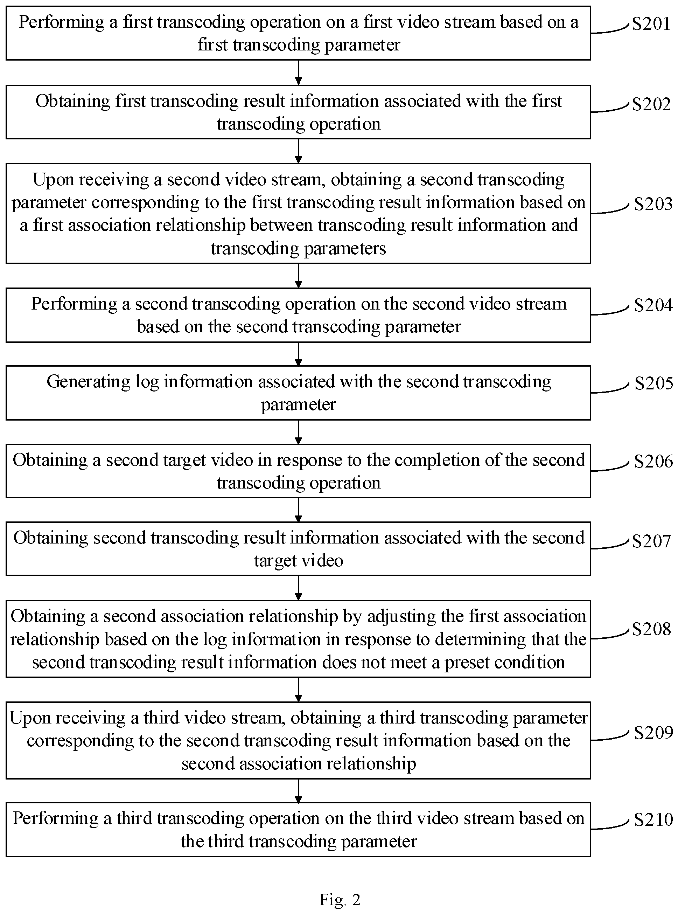

Fig. 2 is a flowchart of a method for video transcoding according to an exemplary embodiment. The method for video transcoding includes the following steps.

In S201, a first transcoding operation is performed on a first video stream based on a first transcoding parameter.

The embodiments of the present disclosure are applied to a scenario where a video stream released in an on-demand system is transcoded, that is, before a video is pushed to a user, the on-demand system performs a transcoding operation on the released video stream.

The first transcoding parameter refers to a video transcoding parameter preset by a parameter designer in the on-demand system. The first transcoding parameter is determined according to business requirements and the on-demand system. This is not limited in the embodiments of the present disclosure.

The first video stream refers to a video stream that is transcoded according to the first transcoding parameter. The first video stream includes a video stream released by the user in the on-demand system. Before corresponding videos are pushed to other users, the on-demand system performs one or more transcoding operations in advance.

The first transcoding operation refers to an operation of performing video transcoding on the first video stream according to the first transcoding parameter. Video transcoding refers to converting a compressed and encoded video bitstream into another video bitstream to adapt to different network bandwidths, different terminal processing capabilities and different user needs.

In the embodiments of the present disclosure, after the on-demand system receives the first video stream released by the user, the first transcoding operation is performed on the first video stream according to the first transcoding parameter preset by a transcoding parameter designer.

After the first transcoding operation is performed on the first video stream on the basis of the first transcoding parameter, S202 is performed.

In S202, first transcoding result information associated with the first transcoding operation is obtained.

The first transcoding result information refers to received transcoding result information fed back by an on-demand system or fed back after a user watches a transcoded video stream, after the transcoded video stream is obtained by transcoding the first video stream. The first transcoding result information includes at least one of video quality (such as peak signal to noise ratio (PSNR)), a video code rate, video complexity information, QoS/QoE indicators (such as video completion rate and lag rate) and the like.

A content contained in the first transcoding result information is determined according to business requirements, which is not limited in the embodiments of the present disclosure.

After the first transcoding operation is performed on the first video stream based on the first transcoding parameter, the first transcoding result information associated with the first transcoding operation is obtained. The first transcoding result information includes quality of service information and/or quality of experience information. The quality of service information refers to information fed back by an on-demand system after the first transcoding operation is performed on the first video stream. The quality of experience information refers to information fed back by a user after the first transcoding operation is performed on the first video stream to obtain a transcoded video stream and the transcoded video stream is pushed to the user.

With regard to different contents contained in the first transcoding result information, manners of obtaining the first transcoding result information associated with the first transcoding operation are also different, which, specifically, are described in detail in the following specific implementations.

In a specific implementation of the present disclosure, in the case that the first transcoding result information includes the quality of service information, S202 includes C1.

In C1, in response to completion of the first transcoding operation, a transcoded first target video is obtained.

In the embodiments of the present disclosure, the first target video refers to a video obtained after the first video stream is transcoded according to the first transcoding parameter.

The quality of service information refers to information fed back by an on-demand system after the first transcoding operation is performed on the first video stream. The quality of service information includes one or more of video quality information, a video code rate, and video complexity information, which, specifically, may be determined according to business requirements, and is not limited in the embodiments of the present disclosure.

After the first transcoding operation is performed on the first video stream based on the first transcoding parameter, the first target video is obtained.

After the first target video is obtained, C2 is performed.

In C2, quality of service information associated with the first target video fed back by the system is obtained.

After obtaining the first target video, the on-demand system automatically feeds back the quality of service information associated with the first target video based on the first target video, namely, quality of service information associated with a target video obtained after the first transcoding operation is performed.

In another specific implementation of the present disclosure, in the case that the first transcoding result information further includes the quality of experience information, S202 further includes D1.

In D1, in a process that the user is watching the first target video, quality of experience information associated with the first target video is monitored by a data monitoring platform.

In the embodiments of the present disclosure, the quality of experience information refers to information fed back by the user after the first target video is pushed to the user, focusing on reflecting quality of the user's experience.

The quality of experience information includes one or more of video lag rate information and video completion rate information.

After the first target video is pushed to the user, the quality of experience information associated with the first target video in the process that the user is watching the first target video is monitored by the data monitoring platform.

After the quality of experience information associated with the first target video is monitored by the data monitoring platform, D2 is performed.

In D2, the quality of experience information monitored by the data monitoring platform is obtained.

After the data monitoring platform monitors and obtains the quality of experience information associated with the first target video, the monitored and obtained quality of experience information may be fed back to the on-demand system by the data monitoring platform, and thus the on-demand system may obtain the quality of experience information.

In the embodiments of the present disclosure, the first transcoding result information includes any one of the quality of service information and the quality of experience information, or includes both the quality of service information and the quality of experience information, which, specifically, may be determined according to business requirements, and is not limited in the embodiments of the present disclosure.

In a specific implementation, the first transcoding result information may further include other information, which, specifically, may be determined according to actual conditions.

After the first transcoding result information associated with the first transcoding operation is obtained, S203 is performed.

In S203, upon receiving a second video stream, a second transcoding parameter corresponding to the first transcoding result information is obtained based on a first association relationship between transcoding result information and transcoding parameters.

The second video stream is a video stream released by the user in the on-demand system, with a transcoding operation performed after the first video stream.

The first video stream can be released in the on-demand system before the second video stream, or the second video stream can be released in the on-demand system before the first video stream. The first video stream and the second video stream can be released in the on-demand system by the same user, or by different users, which, specifically, may be determined according to service requirements, and is not limited in the embodiments of the present disclosure.

The second transcoding parameter refers to a transcoding parameter obtained according to the first transcoding result information obtained by the first transcoding operation.

The first association relationship refers to an association relationship between transcoding result information and transcoding parameters pre-stored in the on-demand system.

The association relationship between transcoding result information and transcoding parameters is pre-stored in the on-demand system. For example, the transcoding result information includes information A, information B, and information C, and transcoding parameters associated with the information A, the information B and the information C respectively are a parameter 1, a parameter 2, and a parameter 3.

The above mapping relationship is stored in the form of a list in the on-demand system, as shown in Table 2 below.

**Table 2**

| Transcoding result information | Transcoding parameter(s) |
|---|---|
| A | 1 |
| B | 2 |
| C | 3 |

Of course, in the on-demand system, the above association relationship is further stored in a database, which, specifically, may be determined according to business requirements, and is not limited in the embodiments of the present disclosure.

Upon receiving the second video stream that needs to be transcoded, the second transcoding parameter corresponding to the first transcoding result information is obtained according to the first association relationship between transcoding result information and transcoding parameters.

After the second transcoding parameter is obtained, S204 is performed.

In S204, a second transcoding operation is performed on the second video stream based on the second transcoding parameter.

After the second transcoding parameter is obtained, the second transcoding operation is performed on the second video stream based on the second transcoding parameter.

According to the embodiments of the present disclosure, the transcoding parameters are automatically adjusted in real time according to the real-time transcoding result information without manual intervention, which reduces the input of labor costs.

In S205, log information associated with the second transcoding parameter is generated.

The log information associated with the second transcoding parameter refers to log information generated in response to that the first transcoding parameter is switched to the second transcoding parameter.

It may be understood that in the process of switching the first transcoding parameter to the second transcoding parameter, a switch process may be recorded in real time, and the first transcoding parameter and the second transcoding parameter to which first transcoding parameter is switched are recorded to obtain the corresponding log information.

According to the log information provided by the embodiments of the present disclosure, in a subsequent process, in the case that the second transcoding parameter obtained by switch is detected to be abnormal, the second transcoding parameter may be switched again.

In S206, in response to completion of the second transcoding operation, a second target video is obtained.

The second target video refers to a video obtained after performing the second transcoding operation on the second video stream using the second transcoding parameter.

In response to completion of the second transcoding operation, the corresponding transcoded second target video may be obtained.

After the transcoded second target video is obtained, S207 is performed.

In S207, second transcoding result information associated with the second target video is obtained.

In the embodiments of the present disclosure, the second transcoding result information refers to received transcoding result information fed back by an on-demand system or fed back after a user watches a transcoded video stream after the transcoded video stream is obtained by transcoding the second video stream. The second transcoding result information includes at least one of video quality (such as peak signal to noise ratio (PSNR)), a video code rate, video complexity information, QoS/QoE indicators (such as video completion rate and lag rate) and the like.

It may be understood that the second transcoding result information corresponds to the first transcoding result information. In the case that the first transcoding result information only includes the quality of service information, the second transcoding result information also only includes the quality of service information. In the case that the first transcoding result information only includes the quality of experience information, the second transcoding result information also only includes the quality of experience information. In the case that the first transcoding result information includes both the quality of service information and the quality of experience information, the second transcoding result information also includes both the quality of service information and the quality of experience information.

A manner of obtaining the second transcoding result information is similar to the above-mentioned manner of obtaining the first transcoding result information, which is not described in detail in the embodiment of the present disclosure.

After the second transcoding result information corresponding to the second target video is obtained, S208 is performed.

In S208, a second association relationship is obtained by adjusting the first association relationship in response to determining that the second transcoding result information does not meet a preset condition based on the log information.

The preset condition refers to a condition configured to determine whether the transcoding result information meets requirements, and whether the transcoding result information meets the requirements may be determined according to the on-demand system and business requirements, which is not limited in the embodiments of the present disclosure.

After the log information associated with the second transcoding parameter is generated, whether the second transcoding result information meets the preset condition or not is determined based on the log information.

In the case that the second transcoding result information does not meet the preset condition, the first association relationship is adjusted to obtain the second association relationship.

After the first association relationship is adjusted to obtain the second association relationship, S209 is performed.

In S209, upon receiving a third video stream, a third transcoding parameter corresponding to the second transcoding result information is obtained based on the second association relationship.

The third transcoding parameter refers to a transcoding parameter obtained by switching the second transcoding parameter according to the second association relationship.

The third video stream refers to a video stream subjected to a transcoding operation using the third transcoding parameter.

Upon receiving the third video stream that needs to be transcoded, the third transcoding parameter corresponding to the second transcoding result information may be obtained according to the second association relationship.

After the third transcoding parameter is obtained, S210 is performed.

In S210, a third transcoding operation is performed on the third video stream based on the third transcoding parameter.

The third transcoding operation refers to a transcoding operation performed on the third video stream using the third transcoding parameter.

After the third transcoding parameter is obtained, the third transcoding operation is performed on the third video stream based on the third transcoding parameter.

In the embodiments of the present disclosure, the association relationship between transcoding result information and transcoding parameters is adjusted according to the log information of switch of the transcoding parameters, which may improve the association relationship according to enough effective inputs, and improve the accuracy of subsequent video transcoding.

It may be understood that the third video stream is a single video stream or a group of video streams (i.e., multiple video streams). In the case that a single video stream is adopted to be subjected to the third transcoding operation, in a subsequent process, the third transcoding parameter is adjusted based on transcoding result information corresponding to the third transcoding operation performed on the single video stream, the accuracy of adjustment is low. In the case that a group of third video streams are adopted to be subjected to the third transcoding operation, and in a subsequent process, the third transcoding parameter is adjusted based on transcoding result information corresponding to the third transcoding operation performed on the group of video streams, the accuracy of parameter adjustment is high.

In the embodiments of the present disclosure, the third video stream is preferably a group of video streams, and of course, the third video stream may also be applied to the embodiments of the present disclosure as a single video stream, which is not limited in the embodiment of the present disclosure.

The video transcoding method provided by the embodiment of the present disclosure, in addition to the beneficial effects of the video transcoding method provided in Embodiment 1, can also adjust the association relationship between the transcoding result information and the transcoding parameters according to the log information of switch of the transcoding parameters, which may improve the association relationship according to enough effective inputs, and improve the accuracy of subsequent video transcoding.

### Embodiment 3.

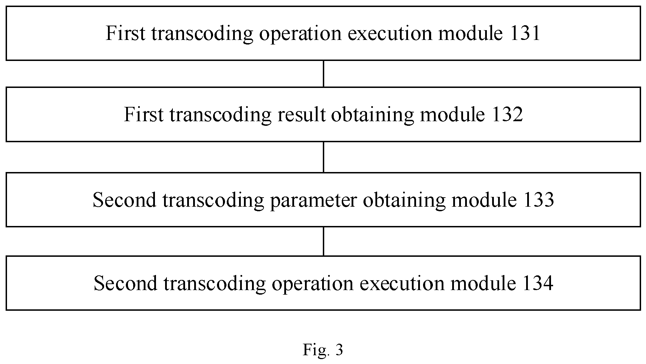

Fig. 3 is a structural block diagram of an apparatus for video transcoding according to an exemplary embodiment. Referring to Fig. 3, the apparatus includes a first transcoding operation execution module 131, a first transcoding result obtaining module 132, a second transcoding parameter obtaining module 133 and a second transcoding operation execution module 134.

The first transcoding operation execution module 131 is configured to perform a first transcoding operation on a first video stream based on a first transcoding parameter.

The first transcoding result obtaining module 132 is configured to obtain first transcoding result information associated with the first transcoding operation.

The second transcoding parameter obtaining module 133 is configured to obtain, based on a first association relationship between transcoding result information and transcoding parameters, a second transcoding parameter corresponding to the first transcoding result information upon receiving a second video stream.

The second transcoding operation execution module 134 is configured to perform a second transcoding operation on the second video stream based on the second transcoding parameter.

In a specific implementation of the embodiments of the present disclosure, the first transcoding result information includes quality of service information, and the first transcoding result obtaining module 132 includes: a first target video obtaining sub-module and a quality of service information obtaining sub-module.

The first target video obtaining sub-module is configured to obtain a first target video in response to completion of the first transcoding operation.

The quality of service information obtaining sub-module is configured to obtain quality of service information associated with the first target video fed back by a system.

The quality of service information includes at least one of video quality information, a video code rate and video complexity information.

In a specific implementation of the embodiments of the present disclosure, the first transcoding result information further includes quality of experience information, and the first transcoding result obtaining module 132 includes: a quality of experience information monitoring sub-module and a quality of experience information obtaining sub-module.

The quality of experience information monitoring sub-module is configured to monitor, by a data monitoring platform, quality of experience information associated with the first target video while a user is watching the first target video.

The quality of experience information obtaining sub-module is configured to obtain the quality of experience information monitored by the data monitoring platform.

The quality of experience information includes at least one of video lag rate information and video completion rate information.

According to the apparatus for video transcoding provided by the embodiments of the application, the first transcoding operation is performed on the first video stream based on the first transcoding parameter; the first transcoding result information associated with the first transcoding operation is obtained; upon receiving the second video stream, the second transcoding parameter corresponding to the first transcoding result information is obtained according to the first association relationship between transcoding result information and transcoding parameters; and the second transcoding operation is performed on the second video stream based on the second transcoding parameter. According to the embodiments of the present disclosure, the transcoding parameters are automatically adjusted in real time according to the real-time transcoding result information without manual intervention, which reduces the input of labor costs.

### Embodiment 4.

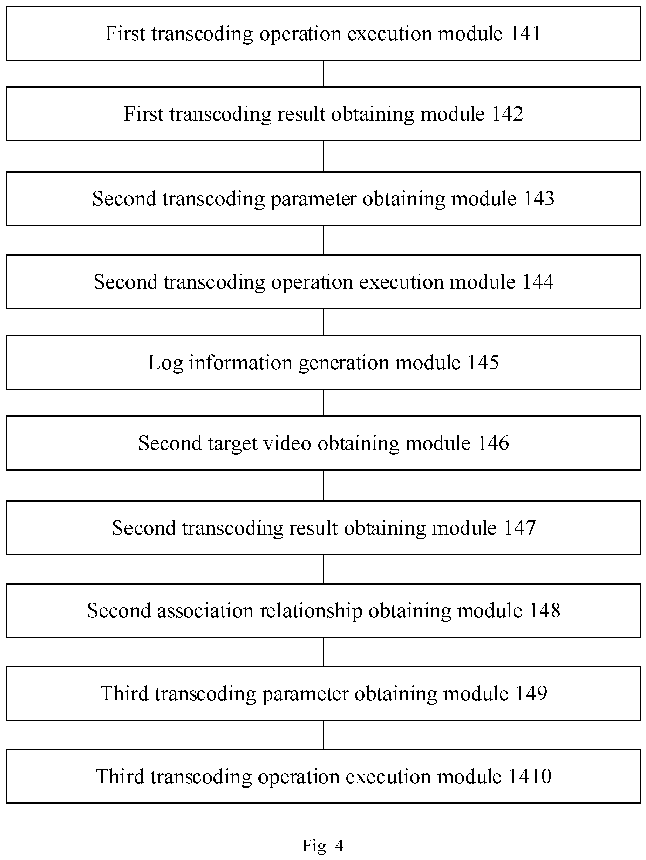

Fig. 4 is a structural block diagram of an apparatus for video transcoding according to an exemplary embodiment. Referring to Fig. 4, the apparatus includes a first transcoding operation execution module 141, a first transcoding result obtaining module 142, a second transcoding parameter obtaining module 143, a second transcoding operation execution module 144, a log information generation module 145, a second target video obtaining module 146, a second transcoding result obtaining module 147, a second association relationship obtaining module 148, a third transcoding parameter obtaining module 149, and a third transcoding operation execution module 1410.

The first transcoding operation execution module 141 is configured to perform a first transcoding operation on a first video stream based on a first transcoding parameter.

The first transcoding result obtaining module 142 is configured to obtain first transcoding result information associated with the first transcoding operation.

The second transcoding parameter obtaining module 143 is configured to obtain, according to a first association relationship between transcoding result information and transcoding parameters, a second transcoding parameter corresponding to the first transcoding result information upon receiving a second video stream.

The second transcoding operation execution module 144 is configured to perform a second transcoding operation on the second video stream based on the second transcoding parameter.

The log information generation module 145 is configured to generate log information associated with the second transcoding parameter.

The second target video obtaining module 146 is configured to obtain a transcoded second target video in response to completion of the second transcoding operation.

The second transcoding result obtaining module 147 is configured to obtain second transcoding result information associated with the second target video.

The second association relationship obtaining module 148 is configured to obtain a second association relationship by adjusting the first association relationship in response to determining that the second transcoding result information does not meet a preset condition based on the log information.

The third transcoding parameter obtaining module 149 is configured to obtain, according to the second association relationship, a third transcoding parameter corresponding to the second transcoding result information upon receiving a third video stream.

The third transcoding operation execution module 1410 is configured to perform a third transcoding operation on the third video stream based on the third transcoding parameter.

The apparatus for video transcoding provided by the embodiments of the present disclosure, in addition to the beneficial effects of the video transcoding apparatus provided in Embodiment 3, can also adjust the association relationship between the transcoding result information and the transcoding parameter according to the log information of switch of the transcoding parameters, which may improve the association relationship according to enough effective inputs, and improve the accuracy of subsequent video transcoding.

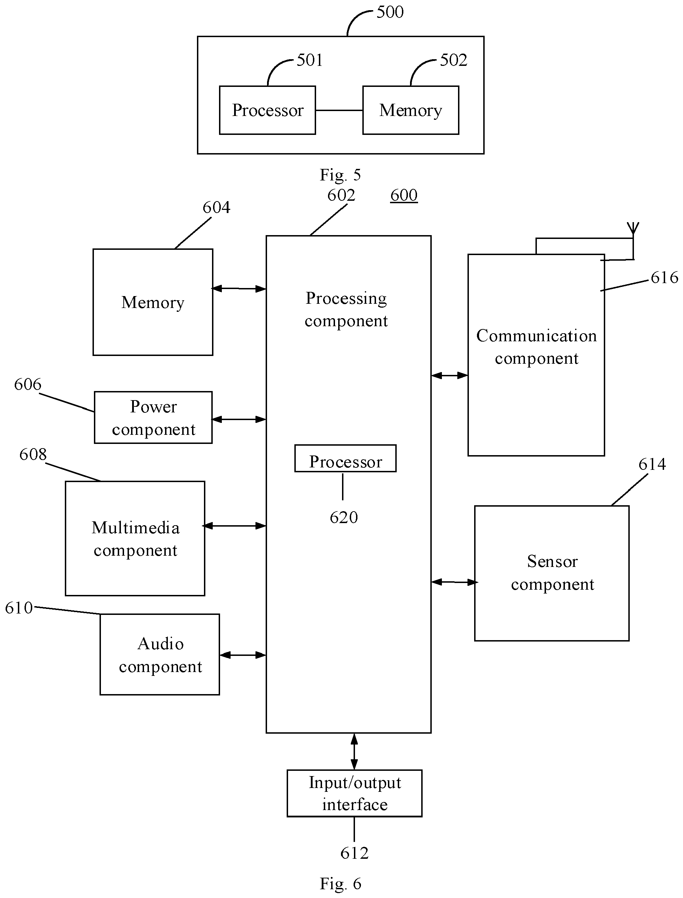

As shown in Fig. 5, an embodiment of the present disclosure further provides a terminal device 500, including: a processor 501; and a memory 502 configured to store instructions executable by the processor 501.

The processor 501 is configured that: when one or more programs are executed by one or more processors 501, the one or more processors 501 may realize the following process: a first transcoding operation is performed on a first video stream based on a first transcoding parameter; first transcoding result information associated with the first transcoding operation is obtained; upon receiving a second video stream, a second transcoding parameter corresponding to the first transcoding result information is obtained according to a first association relationship between transcoding result information and transcoding parameters; and a second transcoding operation is performed on the second video stream based on the second transcoding parameter.

In a specific implementation of the embodiments of the present disclosure, the first transcoding result information includes quality of service information. When obtaining the first transcoding result information associated with the first transcoding operation, the one or more processors 501 are configured to: in response to completion of the first transcoding operation, obtain a first target video; and obtain quality of service information associated with the first target video fed back by a system.

The quality of service information includes at least one of video quality information, a video code rate and video complexity information.

In a specific implementation of the embodiments of the present disclosure, the first transcoding result information further includes quality of experience information. When obtaining the first transcoding result information associated with the first transcoding operation, the one or more processors 501 are configured to: while a user is watching the first target video, monitor, by a data monitoring platform, quality of experience information associated with the first target video; and obtain the quality of experience information monitored by the data monitoring platform.

The quality of experience information includes at least one of video lag rate information and video completion rate information.

In a specific implementation of the embodiments of the present disclosure, after performing the second transcoding operation on the second video stream based on the second transcoding parameter, the one or more processors 501 are further configured to: generate log information associated with the second transcoding parameter; in response to completion of the second transcoding operation, obtain a second target video; obtain second transcoding result information associated with the second target video; and in response to, based on the log information, determining that the second transcoding result information does not meet a preset condition, obtain a second association relationship by adjusting the first association relationship.

In a specific implementation of the embodiments of the present disclosure, after obtaining the second association relationship by adjusting the first association relationship, the one or more processors 501 are further configured to: upon receiving a third video stream, obtain, according to the second association relationship, a third transcoding parameter corresponding to the second transcoding result information; and perform a third transcoding operation on the third video stream based on the third transcoding parameter.

Fig. 6 is a block diagram of an apparatus 600 for video transcoding according to an exemplary embodiment. For example, the apparatus 600 may be a mobile phone, a computer, a digital broadcasting terminal, a messaging device, a game console, a tablet device, a medical device, a fitness device, a personal digital assistant, etc.

Referring to Fig. 6, the apparatus 600 includes one or more of the following components: a processing component 602, a memory 604, a power component 606, a multimedia component 608, an audio component 610, an input/output (I/O) interface 612, a sensor component 614, and a communication component 616.

The processing component 602 generally controls overall operations of the apparatus 600, such as operations associated with display, telephone calls, data communications, camera operations, and recording operations. The processing component 602 includes one or more processors 620 to execute instructions to complete all or part of the steps of the above method. In addition, the processing component 602 includes one or more modules to facilitate the interaction between the processing component 602 and other components. For example, the processing component 602 includes a multimedia module to facilitate the interaction between the multimedia component 608 and the processing component 602.

The memory 604 is configured to store various types of data to support the operations of the apparatus 600. Examples of such data include instructions for any application or method operating on the apparatus 600, contact data, phone book data, messages, pictures, videos, etc. The memory 604 is implemented by any type of volatile or non-volatile storage device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power component 606 provides power for various components of the apparatus 600. The power component 606 includes a power management system, one or more power supplies, and other components associated with generating, managing, and distributing power to the apparatus 600.

The multimedia component 608 includes a screen that provides an output interface between the apparatus 600 and a user. In some embodiments, the screen includes a liquid crystal display (LCD) and a touch panel (TP). If the screen includes the touch panel, the screen is implemented as a touch screen to receive input signals from the user. The touch panel includes one or more touch sensors to sense touch, swiping, and gestures on the touch panel. The touch sensors may not only sense the boundary of the touch or swiping action, but also detect the duration and pressure related to the touch or swiping operation. In some embodiments, the multimedia component 608 includes a front camera and/or a rear camera. When the apparatus 600 is in an operation mode, such as a shooting mode or a video mode, the front camera and/or the rear camera may receive external multimedia data. Each of the front camera and the rear camera may be a fixed optical lens system or has a focal length and optical zoom capabilities.

The audio component 610 is configured to output and/or input audio signals. For example, the audio component 610 includes a microphone (MIC), and when the apparatus 600 is in an operation mode, such as a call mode, a recording mode, and a voice recognition mode, the microphone is configured to receive external audio signals. The received audio signals may be further stored in the memory 604 or transmitted via the communication component 616. In some embodiments, the audio component 610 further includes a loudspeaker configured to output audio signals.

The I/O interface 612 provides an interface between the processing component 602 and a peripheral interface module. The peripheral interface module may be a keyboard, a click wheel, buttons, and the like. These buttons may include, but are not limited to: a home button, a volume button, a start button, and a lock button.

The sensor component 614 includes one or more sensors configured to provide the apparatus 600 with various aspects of state assessment. For example, the sensor component 614 may detect on/off status of the apparatus 600, and relative positioning of components, such as a display and a keypad of the apparatus 600. The sensor component 614 may also detect position change of the apparatus 600 or a component of the apparatus 600, the presence or absence of contact between the user and the apparatus 600, orientation or acceleration/deceleration of the apparatus 600, and temperature change of the apparatus 600. The sensor component 614 may include a proximity sensor configured to detect the presence of nearby objects when there is no physical contact. The sensor component 614 may further include a light sensor, such as a complementary metal oxide semiconductor (CMOS) or (charge-coupled device) CCD image sensor, for use in imaging applications. In some embodiments, the sensor component 614 may also include an acceleration sensor, a gyroscope sensor, a magnetic sensor, a pressure sensor, or a temperature sensor.

The communication component 616 is configured to facilitate wired or wireless communications between the apparatus 600 and other devices. The apparatus 600 may access a wireless network based on a communication standard, such as WiFi, a service provider network (such as 2G, 3G, 4G or 5G) or a combination thereof. In an exemplary embodiment, the communication component 616 receives a broadcast signal or broadcast related information from an external broadcast management system via a broadcast channel. In an exemplary embodiment, the communication component 616 further includes a near field communication (NFC) module to facilitate short-range communications. For example, the NFC module may be implemented based on a radio frequency identification (RFID) technology, an infrared data association (IrDA) technology, an ultra wide band (UWB) technology, a Bluetooth (BT) technology and other technologies.

In an exemplary embodiment, the apparatus 600 may be implemented by one or more application specific integrated circuits (ASICs), digital signal processors (DSPs), digital signal processor devices (DSPDs), programmable logic devices (PLDs), field programmable gate arrays (FPGAs), controllers, microcontrollers, microprocessors, or other electronic elements to execute the above method.

In an exemplary embodiment, a non-transitory computer-readable storage medium including instructions is further provided, such as a memory 604 including instructions, and the above instructions may be executed by a processor 620 of an apparatus 600 to complete the above method. For example, the non-transitory computer-readable storage medium may be an ROM, a random access memory (RAM), a compact disc read-only memory (CD-ROM), a magnetic tape, a floppy disk, an optical data storage device, etc.

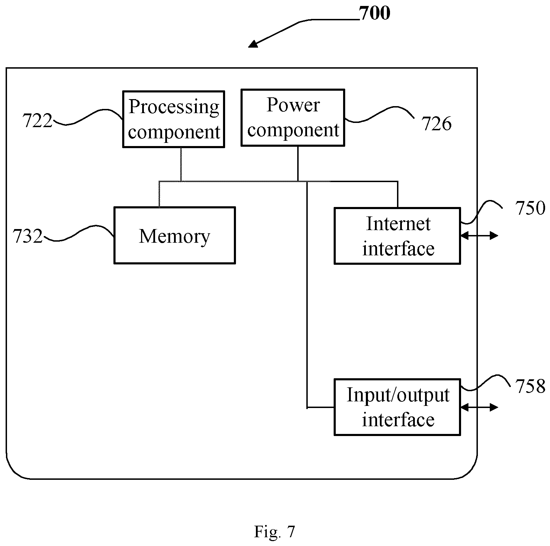

Fig. 7 is a block diagram of an apparatus 700 for video transcoding according to an exemplary embodiment. For example, the apparatus 700 may be provided as a server. Referring to Fig. 7, the apparatus 700 includes a processing component 722 which further includes one or more processors, and memory resources represented by a memory 732 configured to store instructions, such as applications, executable by the processing component 722. The applications stored in the memory 732 may include one or more modules each corresponding to a set of instructions. Further, the processing component 722 is configured to execute instructions to perform the video transcoding method.

The apparatus 700 may further include a power component 726 configured to perform power management of the apparatus 700, a wired or wireless network interface 750 configured to connect the apparatus 700 to a network, and an input/output (I/O) interface 758. The apparatus 700 may operate operating systems stored in the memory 732, such as Windows ServerTM, Mac OS XTM, UnixTM, LinuxTM, FreeBSDTM, or the like.

## Claims

1. A method for video transcoding, comprising:
performing a first transcoding operation on a first video stream based on a first transcoding parameter;
acquiring first transcoding result information associated with the first transcoding operation;
upon receiving a second video stream, obtaining a second transcoding parameter corresponding to the first transcoding result information based on a first association relationship between transcoding result information and transcoding parameters; and
performing a second transcoding operation on the second video stream based on the second transcoding parameter.

2. The method according to claim 1, wherein the first transcoding result information comprises quality of service information, and said acquiring the first transcoding result information associated with the first transcoding operation comprises:
obtaining a first target video in response to completion of the first transcoding operation; and
obtaining the quality of service information associated with the first target video and fed back by a system;
wherein the quality of service information comprises at least one of video quality information, a video code rate and video complexity information.

3. The method according to claim 2, wherein the first transcoding result information further comprises quality of experience information, and said acquiring the first transcoding result information associated with the first transcoding operation comprises:
monitoring, by a data monitoring platform, quality of experience information associated with the first target video while a user is watching the first target video; and
obtaining the quality of experience information monitored by the data monitoring platform;
wherein the quality of experience information comprises at least one of video lag rate information and video completion rate information.

4. The method according to claim 1, wherein after performing the second transcoding operation on the second video stream based on the second transcoding parameter, the method further comprises:
generating log information associated with the second transcoding parameter;
obtaining a second target video in response to completion of the second transcoding operation;
obtaining second transcoding result information associated with the second target video; and
obtaining a second association relationship by adjusting the first association relationship in response to determining that the second transcoding result information does not meet a preset condition based on the log information.

5. The method according to claim 4, wherein after obtaining the second association relationship by adjusting the first association relationship, the method further comprises:
upon receiving a third video stream, obtaining a third transcoding parameter corresponding to the second transcoding result information based on the second association relationship; and
performing a third transcoding operation on the third video stream based on the third transcoding parameter.

6. An apparatus for video transcoding, comprising:
a first transcoding operation execution module, configured to perform a first transcoding operation on a first video stream based on a first transcoding parameter;
a first transcoding result obtaining module, configured to acquire first transcoding result information associated with the first transcoding operation;
a second transcoding parameter obtaining module, configured to obtain a second transcoding parameter corresponding to the first transcoding result information based on a first association relationship between transcoding result information and transcoding parameters upon receiving a second video stream; and
a second transcoding operation execution module, configured to perform a second transcoding operation on the second video stream based on the second transcoding parameter.

7. An electronic device, comprising
a processor; and
a memory, configured to store instructions executable by the processor; wherein execution of the instructions causes the processor to:
perform a first transcoding operation on a first video stream based on a first transcoding parameter;
acquire first transcoding result information associated with the first transcoding operation;
upon receiving a second video stream, obtain a second transcoding parameter corresponding to the first transcoding result information based on a first association relationship between transcoding result information and transcoding parameters; and
perform a second transcoding operation on the second video stream based on the second transcoding parameter.

8. The electronic device according to claim 7, wherein the first transcoding result information comprises quality of service information, and when acquiring the first transcoding result information associated with the first transcoding operation, one or more processors are configured to:
obtain a first target video in response to completion of the first transcoding operation; and
obtain the quality of service information associated with the first target video and fed back by a system;
wherein the quality of service information comprises at least one of video quality information, a video code rate and video complexity information.

9. The electronic device according to claim 8, wherein the first transcoding result information further comprises quality of experience information, and when acquiring the first transcoding result information associated with the first transcoding operation, the one or more processors are configured to:
monitor, by a data monitoring platform, quality of experience information associated with the first target video while a user is watching the first target video; and
obtain the quality of experience information monitored by the data monitoring platform; wherein
the quality of experience information comprises at least one of video lag rate information and video completion rate information.

10. The electronic device according to claim 7, wherein after performing the second transcoding operation on the second video stream based on the second transcoding parameter, the one or more processors are further configured to:
generate log information associated with the second transcoding parameter;
obtain a second target video in response to completion of the second transcoding operation;
obtain second transcoding result information associated with the second target video; and
obtain a second association relationship by adjusting the first association relationship in response to determining that the second transcoding result information does not meet a preset condition based on the log information.

11. The electronic device according to claim 10, wherein after obtaining the second association relationship by adjusting the first association relationship, the one or more processors are further configured to:
upon receiving a third video stream, obtain a third transcoding parameter corresponding to the second transcoding result information based on the second association relationship; and
perform a third transcoding operation on the third video stream based on the third transcoding parameter.

12. A non-transitory computer-readable storage medium, wherein when instructions in the storage medium are executed by a processor of a mobile terminal, the mobile terminal executes the method for video transcoding according to any one of claims 1-5.
